# FASCICULE DE BREVET EUROPEEN

(11) **EP 3 539 259 B1**
(45) Date de publication et mention de la délivrance du brevet: **06.01.2021**
(21) Numéro de dépôt: 17808548.6
(22) Date de dépôt: 10.11.2017
(51) Int. Cl.: H04L 12/26

(54) **PROCÉDÉ ET DISPOSITIF D'ACTUALISATION D'UN MODÈLE PRÉDICTIF D'UNE VARIABLE RELATIVE À UN TERMINAL MOBILE**
VERFAHREN UND VORRICHTUNG ZUR AKTUALISIERUNG EINES PRÄDIKTIVEN MODELLS EINER VARIABLEN IM ZUSAMMENHANG MIT EINEM MOBILEN ENDGERÄT
METHOD AND DEVICE FOR UPDATING A PREDICTIVE MODEL OF A VARIABLE RELATING TO A MOBILE TERMINAL

(30) Priorité: 14.11.2016 FR 1660991
(43) Date de publication de la demande: 18.09.2019
(73) Titulaire: ORANGE, 75015 Paris (FR)
(72) Inventeur: DOOZE, Philippe, 92326 Châtillon Cedex (FR); SAMBA, Alassane, 92326 Châtillon Cedex (FR); DEBEAU, Eric, 92326 Châtillon Cedex (FR)
(86) Numéro de dépôt international: PCT/FR2017/053074
(87) Numéro de publication internationale: WO 2018/087491

(56) Documents cités:
- US-A1- 2005 220 016
- US-A1- 2010 077 077
- US-A1- 2011 045 780
- US-A1- 2013 198 380

## Description

### 1. Domaine de l'invention

La demande d'invention se situe dans le domaine des modèles prédictifs appliqués aux télécommunications mobiles, et plus particulièrement dans le domaine de la mise à jour des modèles prédictifs de paramètres relatifs aux réseaux et services mobiles, générés ou mesurés par des terminaux mobiles.

### 2. Etat de la technique antérieure

Les techniques actuelles de modélisation prédictive (machine learning en anglais) permettent de prédire ou estimer la valeur d'une variable particulière, dite variable cible, en fonction de la connaissance de valeurs d'autres variables, dites prédicteurs, qui lui sont intrinsèquement liés; voir aussi le document US 2010/077077 A1. A partir d'un ensemble de données représentatives, dites données d'apprentissage, des algorithmes mathématiques spécialisés sont capables d'apprendre les relations qui lient une variable avec d'autres, que ces relation soient linéaires ou non. Il existe de nombreux algorithmes capables d'élaborer des modèles prédictifs: "Selective Naives Bayes", réseaux de neurones, "Random Forest", "Linear Model", etc., et de nombreux outils ou langages permettant de les instancier, tels que R, Python, Weka, MILib sous Spark, etc.

Par ailleurs, grâce à la création de circuits intégrés (chipsets en anglais) pour les mobiles, de plus en plus sophistiqués en puissance de calcul, en miniaturisation et en consommation énergétique, il est de plus en plus aisé d'exécuter des algorithmes complexes, tels que ceux issus de ces techniques de modélisation prédictive, sur des "smartphones".

Cependant ces techniques présentent un inconvénient majeur, à savoir leur actualisation. En effet, pour être toujours pertinent, un modèle prédictif doit être mis à jour régulièrement afin d'intégrer tous les changements affectant l'environnement de la variable cible. Par exemple, les plages de valeurs des prédicteurs ou de la variable cible peuvent évoluer, et un prédicteur peut disparaître, ou un nouveau prédicteur peut apparaître. L'actualisation des modèles prédictifs nécessite donc la capture périodique de nouveaux jeux de données d'apprentissage, et leur transfert vers le dispositif d'apprentissage, ce qui représente des tâches particulièrement inadaptées au contexte des télécommunications mobiles, où la bande passante radioélectrique est précieuse et doit rester réservée autant que possible à l'usage des utilisateurs et particulièrement aux flux de données mobiles générés par les applications qu'ils utilisent.

Un des buts de l'invention est de remédier à ces inconvénients de l'état de la technique.

### 3. Exposé de l'invention

L'invention vient améliorer la situation à l'aide d'un procédé d'actualisation d'un modèle prédictif d'une variable représentative du fonctionnement d'un terminal mobile connecté à un réseau de communication par paquets, un premier modèle prédictif étant apte à estimer une valeur de la variable, dite valeur estimée, en fonction de la valeur de paramètres, dits prédicteurs, liés à la variable par un contexte de fonctionnement commun, le procédé étant mis en œuvre par le terminal mobile et comprenant au moins un cycle des étapes suivantes :
- mesure de la variable, produisant une valeur mesurée,
- obtention des valeurs des prédicteurs,
- estimation de la valeur estimée, à l'aide du premier modèle prédictif en fonction des valeurs des prédicteurs,
- génération d'un message d'alimentation, comprenant au moins la valeur mesurée et les valeurs des prédicteurs, si l'écart entre la valeur mesurée et la valeur estimée est supérieur ou égale à un seuil déterminé, dit seuil d'alimentation,
le procédé comprenant en outre les étapes suivantes :
- émission d'au moins un message d'alimentation généré, à destination d'un serveur d'actualisation connecté au réseau,
- réception d'un message d'actualisation, comprenant un deuxième modèle prédictif actualisé sur la base au moins du message d'alimentation, en provenance du serveur d'actualisation,
- remplacement du premier modèle prédictif par le deuxième modèle prédictif.

La variable à estimer peut être, par exemple, le débit instantané dont dispose le terminal pour utiliser des applications nécessitant l'échange de données avec le réseau. Dans la plupart des cas, les données échangées avec le réseau sont susceptibles d'être facturées à l'utilisateur du terminal mobile en fonction de leur volume. Pour l'utilisateur, la valeur de ce débit conditionne l'utilisation ou non d'une application sur le mobile, qui consomme un forfait tarifé au volume. Dans cet exemple, utiliser un modèle prédictif pour estimer le débit instantané permet d'éviter des échanges de données qui sont susceptibles d'être facturés et qui de surcroit surchargent le réseau. Aussi, l'utilisateur pourra décider de ne pas lancer une application qui risque de ne pas fonctionner correctement si le débit instantané est insuffisant.

Des variables liées par un contexte de fonctionnement commun d'un terminal mobile sont des variables représentant des caractéristiques observables et mesurables pendant une même période de fonctionnement du terminal mobile. Par exemple, le débit instantané dont dispose le terminal sur une connexion au réseau, le niveau de signal radioélectrique capté par le terminal mobile, le rapport signal sur bruit de ce signal, et/ou le CQI (Channel Quality Indicator, ou indicateur de qualité de canal, en anglais), sont des variables liées par le même contexte de fonctionnement.

Si la variable à estimer, c'est-à-dire à prédire sans la nécessiter de la mesurer, est le débit instantané, de bons prédicteurs seront donc, a priori, le niveau de signal radioélectrique capté par le terminal mobile, le rapport signal sur bruit, le CQI.

Grâce à l'invention, le modèle prédictif est actualisé en minimisant les échanges de données. En effet, le message d'alimentation servant à actualiser le modèle prédictif est émis par le terminal mobile, et le modèle prédictif de remplacement résultant est reçu par le terminal, uniquement si la contribution à l'amélioration du modèle prédictif apportée par les données comprises dans le message d'alimentation est suffisante. Une façon d'estimer cet apport est par exemple l'écart entre le débit instantané mesuré par le mobile et le débit instantané estimé par le mobile à l'aide du modèle prédictif. Si cet écart est grand, cela signifie que le modèle prédictif est perfectible et que la valeur mesurée de débit, ainsi que les valeurs des prédicteurs, que le mobile peut fournir, peuvent contribuer utilement à son amélioration.

Selon un aspect de l'invention, le seuil d'alimentation utilisé est compris dans un message reçu en provenance du serveur d'actualisation.

Avantageusement, le serveur d'actualisation exerce un contrôle sur le critère d'envoi du message d'alimentation par le terminal mobile. Ainsi si le serveur d'actualisation a besoin de plus de données pour l'amélioration du modèle prédictif, il peut provoquer leur envoi plus fréquent par le terminal mobile en lui envoyant un seuil bas.

Selon un aspect de l'invention, le message d'actualisation comprend un seuil d'alimentation actualisé, et le procédé comprend en outre une étape de remplacement du seuil d'alimentation par le seuil d'alimentation actualisé.

Avantageusement, le terminal mobile peut mettre à jour le seuil d'alimentation avec la même fréquence que le modèle prédictif, sans échange de message additionnel avec le serveur d'actualisation, et en fonction des besoins du serveur d'actualisation.

Selon un aspect de l'invention, le terminal mobile fait partie d'un ensemble de terminaux mobiles dit ensemble de collecte, et le deuxième modèle prédictif reçu est actualisé sur la base d'un message d'alimentation émis par le terminal mobile et au moins un autre terminal mobile de l'ensemble de collecte.

Avantageusement, dans un premier mode particulier de réalisation, le modèle prédictif est amélioré non seulement avec les données émises par le terminal mobile, mais également avec les données émises par d'autres terminaux mobiles faisant partie d'un ensemble de terminaux mettant chacun en œuvre le procédé d'actualisation selon l'invention. Ainsi, le modèle prédictif actualisé bénéficie d'un plus large ensemble de données dont les contextes d'origine sont variés, tout en étant contrôlés grâce aux seuils d'alimentation, ce qui assure une meilleure probabilité de prédiction au modèle. Les seuils d'alimentation peuvent être différents entre terminaux de l'ensemble de collecte, selon les besoins du serveur d'actualisation.

Selon un aspect de l'invention, le procédé d'actualisation comprend en outre une étape de génération d'un deuxième modèle prédictif sur la base du premier modèle prédictif, de la valeur mesurée et des valeurs des prédicteurs, dit modèle prédictif actualisé localement, et le message d'alimentation comprend en outre le modèle prédictif actualisé localement.

Avantageusement, dans un deuxième mode particulier de réalisation, le terminal mobile procède localement à une actualisation du modèle prédictif local, à l'aide de ses propres données. Il dispose ainsi d'un modèle prédictif actualisé avant tout échange de message avec le serveur d'actualisation. L'échange n'est toutefois pas éliminé, car sinon le modèle prédictif ne pourrait pas bénéficier de l'apport des données issues d'autres terminaux mobiles. Sauf si une étape optionnelle de validation invalide le premier modèle actualisé par exemple parce qu'il n'améliore pas l'exactitude de l'estimation de la variable, l'échange a donc lieu et le message d'alimentation émis comprend le premier modèle actualisé, ce qui permet d'économiser les calculs à faire dans le serveur d'actualisation. L'échange est aussi déclenché par la comparaison au seuil d'alimentation, qu'il est possible de régler pour déclencher l'échange moins fréquemment tout en prenant en compte l'efficacité du modèle prédictif actualisé localement.

Selon un aspect de l'invention, le procédé d'actualisation comprend une étape préalable d'obtention du premier modèle prédictif depuis un serveur de stockage connecté au réseau de communication par paquets.

Avantageusement, le terminal peut obtenir une première version du premier modèle prédictif en le téléchargeant depuis un serveur de stockage, qui peut être par exemple un "application store", tel que l' "Appel Store" ou le "Google Play". Ainsi, l'initialisation du processus réalisant l'invention se fait de façon classique pour le terminal, en installant une application mobile depuis un store, l'application comprenant un premier modèle prédictif.

Les différents aspects du procédé d'actualisation qui viennent d'être décrits peuvent être mis en œuvre indépendamment les uns des autres ou en combinaison les uns avec les autres.

L'invention concerne aussi un procédé de distribution d'un modèle prédictif d'une variable représentative du fonctionnement d'un terminal mobile connecté à un réseau de communication par paquets, dit modèle prédictif, un premier modèle prédictif étant apte à estimer une valeur de la variable, dite valeur estimée, en fonction de la valeur de paramètres, dits prédicteurs, liés à la variable par un contexte de fonctionnement commun, le procédé étant mis en œuvre par un serveur d'actualisation connecté au réseau de communication par paquets et comprenant les étapes suivantes :
- réception, en provenance du terminal mobile, d'un message d'alimentation, comprenant au moins une valeur mesurée de la variable et des valeurs des prédicteurs,
- génération d'un deuxième modèle prédictif sur la base au moins du premier modèle prédictif et du message d'alimentation, le deuxième modèle prédictif, dit modèle prédictif actualisé, étant destiné à remplacer le premier modèle prédictif,
- émission, à destination du terminal mobile, d'un premier message d'actualisation comprenant le modèle prédictif actualisé,
- émission, à destination d'un serveur de stockage connecté au réseau de communication par paquets, d'un deuxième message d'actualisation comprenant le modèle prédictif actualisé.

Grâce au procédé de distribution selon l'invention, le modèle prédictif est actualisé en fonction de données réelles issues de terminaux utilisant le modèle prédictif. De plus, le modèle actualisé ne profite pas seulement au terminal ayant contribué à son amélioration, mais à n'importe quel terminal, par l'intermédiaire d'un serveur de stockage, qui peut être par exemple un "application store", tel que l' "Appel Store" ou le "Google Play". Le modèle prédictif peut être intégré dans une application stockée dans le store, et cette application peut inclure un programme permettant au terminal téléchargeant l'application de mettre en œuvre le procédé d'actualisation décrit plus haut, et ainsi devenir un terminal contributeur à l'amélioration du modèle prédictif. Alternativement, l'application intégrant le modèle prédictif peut n'inclure qu'un programme permettant au terminal téléchargeant l'application uniquement d'utiliser le modèle prédictif, sans qu'il émette de message d'alimentation. Une option possible peut être toutefois de recevoir automatiquement les modèles prédictifs actualisés.

Selon un aspect de l'invention, le premier message d'actualisation comprend en outre un seuil relatif à un écart maximal autorisé entre la valeur estimée et la valeur mesurée, dit seuil d'alimentation actualisé.

Avantageusement, le serveur d'actualisation peut émettre vers le terminal un seuil d'alimentation mis à jour en fonction des données qu'il a reçues dans des messages d'alimentation. Ainsi, si le modèle prédictif mis à jour avec des données provenant du terminal et d'autres terminaux a permis d'en améliorer l'efficacité, il est moins nécessaire d'actualiser le modèle prédictif. Dans ce cas, un seuil plus élevé permettra de réduire le nombre de messages d'alimentation émis par le ou les terminaux et reçus par le serveur d'actualisation.

Selon un aspect de l'invention, le procédé de distribution comprend en outre une étape de validation du modèle prédictif actualisé, et les étapes d'émission ne sont mises en œuvre que si le modèle prédictif actualisé est plus efficace que le premier modèle prédictif.

Selon un aspect de l'invention, le message d'alimentation comprend en outre le premier modèle prédictif, le premier modèle prédictif ayant été actualisé localement par le terminal, et l'étape de génération comprend une étape d'agrégation du premier modèle prédictif avec d'autres modèles prédictifs actualisés localement par d'autres terminaux.

Avantageusement, dans le deuxième mode particulier de réalisation de l'invention où le terminal est apte à actualiser lui-même localement son modèle prédictif, le serveur d'actualisation peut prendre en compte ce modèle prédictif afin de l'agréger avec d'autres modèles prédictifs actualisés localement par d'autres terminaux mobiles, que le serveur d'actualisation a également obtenu d'une façon similaire. Ainsi un nouveau modèle prédictif peut être généré par agrégation de plusieurs modèles prédictifs ayant chacun été actualisé avec des données différentes par plusieurs terminaux mobiles. Plusieurs techniques d'agrégation existent, connues pour améliorer les performances d'un modèle prédictif, selon leur type. Par exemple, pour un modèle prédictif généré à partir de Random Forest, l'agrégation consiste à regrouper l'ensemble des arbres décisionnel des forêts aléatoires fournies par les différents terminaux au sein d'une seule et même forêt aléatoire résultante. Dans le cas d'un modèle prédictif généré à partir de Linear Model, il faut récupérer l'ensemble des poids affectés aux prédicteurs de chaque modèle afin de calculer des poids moyens pour le model agrégé.

Selon un aspect de l'invention, l'étape d'agrégation comprend en outre une étape préalable de vérification du premier modèle prédictif, et l'étape de génération ne prend en compte le premier modèle prédictif que si l'étape de vérification montre que le premier modèle prédictif apporte une contribution utile au modèle prédictif généré.

Si par exemple l'écart entre les valeurs mesurées et estimées ne bouge pas, il se peut que le modèle prédictif généré souffre de sur-apprentissage favorisant le terminal au détriment d'autres terminaux mettant en œuvre le même procédé d'actualisation selon l'invention.

Les différents aspects du procédé de distribution qui viennent d'être décrits peuvent être mis en œuvre indépendamment les uns des autres ou en combinaison les uns avec les autres.

L'invention concerne encore un terminal mobile connecté à un réseau de communication par paquets, apte à actualiser un modèle prédictif d'une variable représentative du fonctionnement du terminal mobile, un premier modèle prédictif étant apte à estimer une valeur de la variable, dite valeur estimée, en fonction de la valeur de paramètres, dits prédicteurs, liés à la variable par un contexte de fonctionnement commun, comprenant au moins un processeur configuré pour effectuer les actions suivantes :
- mesure de la variable, produisant une valeur mesurée,
- obtention des valeurs des prédicteurs,
- estimation de la valeur estimée, à l'aide du premier modèle prédictif en fonction des valeurs des prédicteurs,
- génération d'un message d'alimentation, comprenant au moins la valeur mesurée et les valeurs des prédicteurs, si l'écart entre la valeur mesurée et la valeur estimée est supérieur ou égale à un seuil déterminé, dit seuil d'alimentation,
- émission d'au moins un message d'alimentation généré, à destination d'un serveur d'actualisation connecté au réseau,
- réception d'un message d'actualisation, comprenant un deuxième modèle prédictif actualisé sur la base au moins du message d'alimentation, en provenance du serveur d'actualisation,
- remplacement du premier modèle prédictif par le deuxième modèle prédictif.

Ce terminal mobile est apte à mettre en œuvre dans tous ses modes de réalisation le procédé d'actualisation qui vient d'être décrit.

L'invention concerne également un **serveur d'actualisation** connecté à un réseau de communication par paquets, apte à distribuer un modèle prédictif d'une variable représentative du fonctionnement d'un terminal mobile connecté au réseau de communication par paquets, dit modèle prédictif, un premier modèle prédictif étant apte à estimer une valeur de la variable, dite valeur estimée, en fonction de la valeur de paramètres, dits prédicteurs, liés à la variable par un contexte de fonctionnement commun, comprenant au moins un processeur configuré pour effectuer les actions suivantes :
- réception, en provenance du terminal mobile, d'un message d'alimentation, comprenant au moins une valeur mesurée de la variable et des valeurs des prédicteurs,
- génération d'un deuxième modèle prédictif sur la base au moins du premier modèle prédictif et du message d'alimentation, le deuxième modèle prédictif, dit modèle prédictif actualisé, étant destiné à remplacer le premier modèle prédictif,
- émission, à destination du terminal mobile, d'un premier message d'actualisation comprenant le modèle prédictif actualisé,
- émission, à destination d'un serveur de stockage connecté au réseau de communication par paquets, d'un deuxième message d'actualisation comprenant le modèle prédictif actualisé.

Ce serveur d'actualisation est apte à mettre en œuvre dans tous ses modes de réalisation le procédé de distribution qui vient d'être décrit.

L'invention concerne en outre un système d'actualisation et de distribution d'un modèle prédictif comprenant au moins un terminal mobile tel que celui qui vient d'être décrit, un serveur d'actualisation tel que celui qui vient d'être décrit, et un serveur de stockage de modèles prédictifs.

L'invention concerne aussi un programme d'ordinateur comprenant des instructions pour la mise en œuvre des étapes du procédé d'actualisation qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un terminal mobile, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

En particulier, le support d'information peut être un "application store" pour terminaux mobiles, tel que les stores connus sous leur appellations commerciales "Apple Store", ou "Google Play".

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple d'enchainement et de mise en œuvre des étapes du procédé d'actualisation d'un modèle prédictif d'une variable représentative du fonctionnement d'un terminal mobile et du procédé de distribution d'un modèle prédictif d'une variable représentative du fonctionnement d'un terminal mobile, selon un premier mode de réalisation de l'invention,
- la figure 2 présente un exemple d'enchainement et de mise en œuvre des étapes du procédé d'actualisation d'un modèle prédictif d'une variable représentative du fonctionnement d'un terminal mobile et du procédé de distribution d'un modèle prédictif d'une variable représentative du fonctionnement d'un terminal mobile, selon un deuxième mode de réalisation de l'invention,
- la figure 3 présente un exemple de structure d'un dispositif d'actualisation d'un modèle prédictif d'une variable représentative du fonctionnement d'un terminal mobile, selon un aspect de l'invention,
- la figure 4 présente un exemple de structure d'un dispositif de distribution d'un modèle prédictif d'une variable représentative du fonctionnement d'un terminal mobile, selon un aspect de l'invention.

### 5. Description détaillée d'au moins un mode de réalisation de l'invention

Dans la suite de la description, on présente des exemples de plusieurs modes de réalisation de l'invention se basant sur l'estimation du débit instantané d'un terminal mobile, mais l'invention s'applique également à tout autre variable représentative du fonctionnement d'un terminal mobile connecté à un réseau de communication par paquets, quel que soit le protocole de connexion de ce terminal à ce réseau.

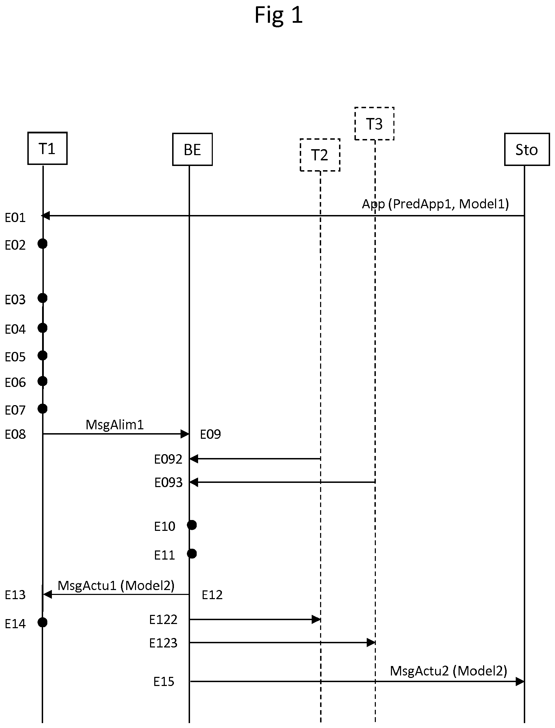

La **figure 1** présente un exemple d'enchainement et de mise en œuvre des étapes du procédé d'actualisation d'un modèle prédictif d'une variable représentative du fonctionnement d'un terminal mobile et du procédé de distribution d'un modèle prédictif d'une variable représentative du fonctionnement d'un terminal mobile, **selon un premier mode de réalisation** de l'invention.

Dans cet exemple, la variable représentative du fonctionnement du terminal T1 est le débit instantané. Le débit instantané conditionne l'exécution sur le terminal de certaines applications nécessitant des échanges de données volumineux.

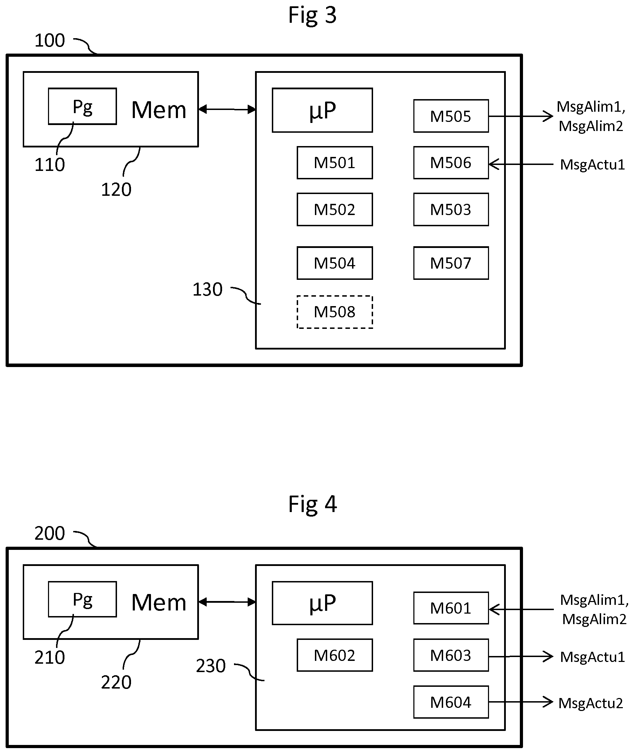

Au préalable, le terminal T1 doit avoir obtenu un premier modèle prédictif d'estimation du débit instantané. Cela peut être fait par exemple, à l'initiative de l'utilisateur, lors d'une étape E01 lors de laquelle le terminal télécharge depuis le serveur de stockage Sto, qui peut être un "application store", une application PredApp1 pour téléphone mobile ou pour tablette comprenant le premier modèle prédictif Model1, suivie d'une étape E02 où l'application et le modèle Model1 sont installés dans une mémoire vive du terminal T1. Par exemple, en référence à la **figure 3**, un dispositif d'actualisation 100 du terminal T1 comprend une unité de traitement 130, équipée par exemple d'un microprocesseur µP, et pilotée par un programme d'ordinateur 110, stocké dans une mémoire 120 et mettant en œuvre le procédé d'actualisation selon l'invention. A l'initialisation, les instructions de code du programme d'ordinateur 110 correspondant à l'application PredApp1 sont par exemple chargées dans une mémoire RAM, avant d'être exécutées par le processeur de l'unité de traitement 130.

La version initiale de ce premier modèle prédictif Model1 peut être élaborée selon une méthode connue et distincte des procédés selon l'invention, qui ne sera donc pas détaillée ici.

Les étapes E03 à E08, E13 et E14 font partie du procédé d'actualisation selon le premier mode de réalisation de l'invention, et sont mises en œuvre dans le terminal T1.

Les étapes E09 à E12 et E15 font partie du procédé de distribution selon le premier mode de réalisation de l'invention, et sont mises en œuvre dans le serveur BE, qui est un serveur du réseau, dit serveur d'actualisation, apte à actualiser le modèle prédictif avec de nouvelles données d'apprentissage et à le distribuer à des terminaux tel que le terminal T1, et/ou à un "application store" tel que le serveur Sto.

Lors d'une étape E03, le terminal T1 mesure le débit instantané Mvar dont il dispose sur sa connexion radioélectrique avec le réseau de communication par paquets, et obtient ainsi une valeur de la variable Mvar.

Lors d'une étape E04, le terminal T1 mesure, ou obtient d'une façon quelconque des valeurs des prédicteurs Pred1, Pred2, etc. Ces prédicteurs sont par exemple : le niveau de signal radioélectrique capté par le terminal mobile, le rapport signal sur bruit, le CQI.

Lors d'une étape E05, le terminal T1 calcule une valeur Evar du débit instantané, par estimation à l'aide du modèle prédictif Model1 et des prédicteurs Pred1, Pred2, etc.

On comprend que plus l'écart entre les valeurs Evar et Mvar est grand, plus le modèle prédictif Model1 est perfectible.

Lors d'une étape E06, le terminal T1 compare l'écart entre Evar et Mvar avec un seuil d'alimentation S1. Si cet écart est supérieur ou égal à S1, le procédé d'actualisation continue. Sinon, il s'arrête, pour recommencer à l'étape E03, après un intervalle déterminé par exemple par l'application PredApp1, téléchargée et installée lors des étapes E01 et E02.

Le seuil d'alimentation S1 utilisé lors de l'étape E06 est par exemple lui aussi déterminé par cette même application PredApp1, ou obtenu avec l'application lors de l'étape E01. Alternativement, il peut être transmis au terminal T1 dans un message en provenance du serveur d'actualisation BE.

Lors d'une étape E07, le terminal T1 génère un message d'alimentation MsgAlim1 comprenant la valeur Mvar ainsi que les valeurs des prédicteurs Pred1, Pred2, etc.

Lors d'une étape E08, le terminal T1 émet le message d'alimentation MsgAlim1 à destination du serveur d'actualisation BE.

Le serveur d'actualisation BE reçoit le message d'alimentation MsgAlim1 en provenance du terminal T1 lors d'une étape E09.

Lors d'étapes similaires E092, E093, etc., le serveur BE peut recevoir d'autres messages d'alimentation en provenance d'autres terminaux T2, T3, etc., ayant installé la même application PredApp1 que le terminal T1. Ces terminaux font partie avec T1 d'un ensemble de terminaux, dits terminaux de collecte.

Lors d'une étape E10, le serveur BE génère un deuxième modèle prédictif Model2 sur la base du premier modèle prédictif Model1 et en utilisant les valeurs comprises dans le message d'alimentation MsgAlim1, et le cas échéant, comprises dans les autres messages d'alimentation reçus d'autres terminaux de collecte.

Lors d'une étape optionnelle E11, le serveur BE valide le modèle prédictif généré Model2, par exemple en vérifiant que l'écart entre valeurs mesurées et estimées du débit instantané a bien diminué, par rapport au premier modèle prédictif Model1. Si c'est le cas, le procédé de distribution mis en œuvre par le serveur BE continue. Sinon, il s'arrête, pour recommencer après réception de nouveaux messages d'alimentation, par exemple à l'étape E09.

Lors d'une étape E12, le serveur BE émet un premier message d'actualisation MsgActu1, comprenant le modèle prédictif actualisé Model2, à destination du terminal T1. Similairement, lors d'étapes E122, E123, etc., le serveur BE émet le même message d'actualisation MsgActu1 à destination des autres terminaux de collecte T2, T3, etc.

Optionnellement, le serveur BE calcule une nouvelle valeur du seuil d'alimentation S1, destinée à remplacer la valeur que les terminaux T1, T2, T3, etc. ont en mémoire, et insère cette nouvelle valeur dans le message MsgActu1. Ceci permet la mise à jour du seuil d'alimentation en fonction de l'efficacité du modèle prédictif, du point de vue du serveur BE. Ainsi, il est possible de réduire les échanges de messages avec les terminaux en augmentant le seuil si l'efficacité est bonne.

Lors d'une étape E15, le serveur BE émet un deuxième message d'actualisation MsgActu2, comprenant le modèle prédictif actualisé Model2, à destination du serveur de stockage Sto, qui peut ainsi mettre à jour l'application PredApp1 avec le nouveau modèle prédictif actualisé Model2. Les terminaux mobiles téléchargeant et installant ultérieurement l'application PredApp1 pourront ainsi bénéficier de la même version du modèle prédictif que les terminaux de collecte ayant contribué à son amélioration. Les fréquences d'émission des messages MsgActu1 et MsgActu2 peuvent être différentes, par exemple afin de privilégier les terminaux de collecte par rapport à des terminaux installant ultérieurement l'application PredApp1.

Lors d'une étape E13, le terminal T1 reçoit le message d'actualisation MsgActu1 comprenant le modèle prédictif actualisé Model2. Si ce message comprend également une valeur de seuil d'alimentation, le terminal T1 remplace l'ancienne valeur du seuil S1 par cette valeur, pour une future utilisation.

Lors d'une étape E14, le terminal T1 remplace le modèle prédictif Model1 par le modèle prédictif actualisé Model2, dont les performances de prédiction sont meilleures. Ainsi, lors de l'utilisation normale du modèle prédictif en dehors du procédé d'actualisation selon l'invention, le terminal T1 peut estimer son débit instantané avec une plus grande précision, sans avoir à le mesurer.

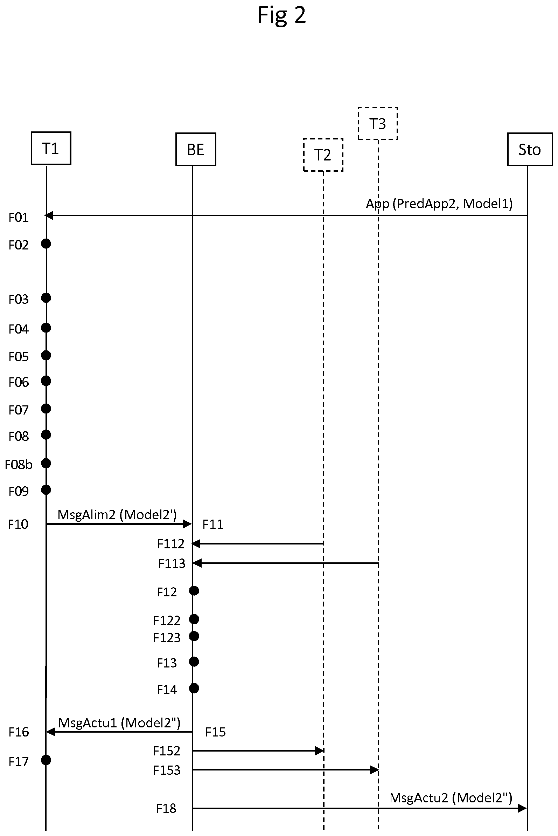

La **figure 2** présente un exemple d'enchainement et de mise en œuvre des étapes du procédé d'actualisation d'un modèle prédictif d'une variable représentative du fonctionnement d'un terminal mobile et du procédé de distribution d'un modèle prédictif d'une variable représentative du fonctionnement d'un terminal mobile, **selon un deuxième mode de réalisation** de l'invention.

Comme dans le précédent exemple, la variable représentative du fonctionnement du terminal T1 est le débit instantané. Le débit instantané conditionne l'exécution sur le terminal de certaines applications nécessitant des échanges de données volumineux. Ce deuxième mode de réalisation diffère principalement du premier en ce que le terminal T1 génère localement un deuxième modèle prédictif Model2' sur la base du premier modèle prédictif Model1, et l'émet vers le serveur d'actualisation BE dans le message d'alimentation afin qu'il soit pris en compte dans la génération du nouveau modèle prédictif Model2", actualisé centralement par le serveur d'actualisation BE.

Au préalable, le terminal T1 doit avoir obtenu un premier modèle prédictif d'estimation du débit instantané. Cela peut être fait par exemple, à l'initiative de l'utilisateur, lors d'une étape F01 lors de laquelle le terminal télécharge depuis le serveur de stockage Sto, qui peut être un "application store", une application PredApp2 pour téléphone mobile ou pour tablette comprenant le premier modèle prédictif Model1, suivie d'une étape F02 où l'application et le modèle Model1 sont installés dans une mémoire vive du terminal T1. Par exemple, en référence à la **figure 3**, un dispositif d'actualisation 100 du terminal T1 comprend une unité de traitement 130, équipée par exemple d'un microprocesseur µP, et pilotée par un programme d'ordinateur 110, stocké dans une mémoire 120 et mettant en œuvre le procédé d'actualisation selon l'invention. A l'initialisation, les instructions de code du programme d'ordinateur 110 correspondant à l'application PredApp2 sont par exemple chargées dans une mémoire RAM, avant d'être exécutées par le processeur de l'unité de traitement 130.

La version initiale de ce premier modèle prédictif Model1 peut être élaborée selon une méthode connue et distincte des procédés selon l'invention, qui ne sera donc pas détaillée ici.

Les étapes F03 à F10, F16 et F17 font partie du procédé d'actualisation selon ce deuxième mode de réalisation de l'invention, et sont mises en œuvre dans le terminal T1.

Les étapes F11 à F15 et F18 font partie du procédé de distribution selon ce deuxième mode de réalisation de l'invention, et sont mises en œuvre dans le serveur BE, qui est un serveur du réseau, dit serveur d'actualisation, apte à actualiser le modèle prédictif avec de nouvelles données d'apprentissage et de nouveau modèles actualisé localement, et à le distribuer à des terminaux tel que le terminal T1, et/ou à un "application store" tel que le serveur Sto.

Lors d'une étape F03 identique à l'étape E03, le terminal T1 mesure le débit instantané Mvar dont il dispose sur sa connexion radioélectrique avec le réseau de communication par paquets, et obtient ainsi une valeur de la variable Mvar.

Lors d'une étape F04 identique à l'étape E04, le terminal T1 mesure, ou obtient d'une façon quelconque des valeurs des prédicteurs Pred1, Pred2, etc.

Lors d'une étape F05 identique à l'étape E05, le terminal T1 calcule une valeur Evar du débit instantané, par estimation à l'aide du modèle prédictif Model1 et des prédicteurs Pred1, Pred2, etc.

On comprend que plus l'écart entre les valeurs Evar et Mvar est grand, plus le modèle prédictif Model1 est perfectible.

Lors d'une étape F06 identique à l'étape E06, le terminal T1 compare l'écart entre les valeurs Evar et Mvar à un seuil d'alimentation S1. Si cet écart est supérieur ou égal à S1, le procédé d'actualisation continue. Sinon, il s'arrête, pour recommencer à l'étape F03, après un intervalle déterminé par exemple par l'application PredApp2, téléchargée et installée lors des étapes F01 et F02.

Le seuil d'alimentation S1 utilisé lors de l'étape F06 est par exemple lui aussi déterminé par cette même application PredApp1, ou obtenu avec l'application lors de l'étape F01. Alternativement, il peut être transmis au terminal T1 dans un message en provenance du serveur d'actualisation BE.

Lors d'une étape F07, le terminal T1 génère localement un deuxième modèle prédictif Model2' sur la base du premier modèle prédictif Model1 et en utilisant la valeur Mvar ainsi que les valeurs des prédicteurs Pred1, Pred2, etc.

Lors d'une étape F08, le terminal T1 valide le modèle prédictif Model2' généré localement, par exemple en vérifiant que l'écart entre valeur mesurée et estimée du débit instantané a bien diminué, par rapport au premier modèle prédictif Model1. Si c'est le cas, le procédé d'actualisation mis en œuvre par le terminal T1 continue. Sinon, il s'arrête, pour recommencer à l'étape F03, après l'intervalle déterminé mentionné plus haut.

Lors d'une étape F08b optionnelle, le terminal T1 remplace le modèle prédictif Model1 par le modèle prédictif actualisé localement Model2', dont les performances de prédiction sont meilleures.

Lors d'une étape F09, le terminal T1 génère un message d'alimentation MsgAlim2 comprenant le modèle prédictif Model2' actualisé localement par le terminal T1, la valeur Mvar ainsi et les valeurs des prédicteurs Pred1, Pred2, etc.

Lors d'une étape F10, le terminal T1 émet le message d'alimentation MsgAlim2 à destination du serveur d'actualisation BE.

Le serveur d'actualisation BE reçoit le message d'alimentation MsgAlim2 en provenance du terminal T1 lors d'une étape F11.

Lors d'étapes similaires F112, F113, etc., le serveur BE peut recevoir d'autres messages d'alimentation en provenance d'autres terminaux T2, T3, etc., ayant installé la même application PredApp2 que le terminal T1. Ces terminaux font partie avec T1 d'un ensemble de terminaux, dits terminaux de collecte.

Lors d'une étape F12, le serveur BE vérifie que la contribution potentielle de chaque terminal est utile. Pour ce faire le serveur BE vérifie que les modèles prédictif envoyés par chaque terminaux ne sont pas victimes de sur-apprentissage ("overfitting check" en anglais) c'est-à-dire trop fortement liés aux données ayant servis à les créer ou à les mettre à jour. La vérification de sur-apprentissage consiste à utiliser le modèle prédictif issu d'un terminal avec les prédicteurs issus d'un autre terminal; plus le modèle est victime de sur-apprentissage, plus l'écart entre valeurs mesurée et estimée sera grand.

Lors d'une étape F13, le serveur BE génère un nouveau modèle prédictif, Model2", en agrégeant les modèles prédictifs actualisés localement qu'il a reçus des terminaux lors des étapes F11, F112, F113, etc., dont le deuxième modèle prédictif Model2' reçu lors de l'étape F11, si celui-ci a été validé par l'étape F12 de vérification. La technique d'agrégation de modèles utilisée dépend de la technique inhérente au modèle prédictif utilisé, et n'est pas détaillée ici.

Lors d'une étape optionnelle F14, le serveur BE valide le modèle prédictif généré par agrégation Model2", par exemple en vérifiant que l'écart entre valeurs mesurées et estimées du débit instantané a bien diminué, par rapport au premier modèle prédictif Model1. Si c'est le cas, le procédé de distribution mis en œuvre par le serveur BE continue. Sinon, il s'arrête, pour recommencer après réception de nouveaux messages d'alimentation, par exemple à l'étape F11.

Lors d'une étape F15, le serveur BE émet un premier message d'actualisation MsgActu1, comprenant le modèle prédictif actualisé Model2", à destination du terminal T1. Similairement, lors d'étapes F152, F153, etc., le serveur BE émet le même message d'actualisation MsgActu1 à destination des autres terminaux de collecte T2, T3, etc.

Optionnellement, le serveur BE calcule une nouvelle valeur du seuil d'alimentation S1, destinée à remplacer la valeur que les terminaux T1, T2, T3, etc. ont en mémoire, et insère cette nouvelle valeur dans le message MsgActu1. Ceci permet la mise à jour du seuil d'alimentation en fonction de l'efficacité du modèle prédictif, du point de vue du serveur BE. Ainsi, il est possible de réduire les échanges de messages avec les terminaux en augmentant le seuil si l'efficacité est bonne.

Lors d'une étape F18, le serveur BE émet un deuxième message d'actualisation MsgActu2, comprenant le modèle prédictif actualisé Model2", à destination du serveur de stockage Sto, qui peut ainsi mettre à jour l'application PredApp2 avec le nouveau modèle prédictif actualisé Model2". Les terminaux mobiles téléchargeant et installant ultérieurement l'application PredApp2 pourront ainsi bénéficier de la même version du modèle prédictif que les terminaux de collecte ayant contribué à son amélioration. Les fréquences d'émission des messages MsgActu1 et MsgActu2 peuvent être différentes, par exemple afin de privilégier les terminaux de collecte par rapport à des terminaux installant ultérieurement l'application PredApp2.

Lors d'une étape F16, le terminal T1 reçoit le message d'actualisation MsgActu1 comprenant le modèle prédictif actualisé Model2". Si ce message comprend également une valeur de seuil d'alimentation, le terminal T1 remplace l'ancienne valeur du seuil S1 par cette valeur, pour une future utilisation.

Lors d'une étape F17, le terminal T1 remplace le modèle prédictif Model1 ou Model2', selon le cas, par le modèle prédictif actualisé Model2", dont les performances de prédiction sont meilleures. Ainsi, lors de l'utilisation normale du modèle prédictif en dehors du procédé d'actualisation selon l'invention, le terminal T1 peut estimer son débit instantané avec une plus grande précision, sans avoir à le mesurer.

La **figure 3** présente un exemple de structure d'un dispositif d'actualisation d'un modèle prédictif d'une variable représentative du fonctionnement d'un terminal mobile, selon un aspect de l'invention.

Le dispositif 100 d'actualisation met en œuvre le procédé d'actualisation, dont différents modes de réalisation viennent d'être décrits.

Un tel dispositif 100 peut être mis en œuvre dans un terminal mobile apte à se connecter à tout type de réseau de communication par paquets, tel que 4G, WiFi, etc.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé d'actualisation selon l'invention. A l'initialisation, les instructions de code du programme d'ordinateur 110 sont par exemple chargées dans une mémoire RAM, avant d'être exécutées par le processeur de l'unité de traitement 130.

Une telle mémoire 120 et un tel processeur de l'unité de traitement 130 sont aptes à, et configurés pour contrôler des modules matériels ou logiciels du dispositif 100, parmi lesquels :
- un module M501 apte à mesurer une variable de fonctionnement d'un terminal mobile, produisant une valeur mesurée,
- un module M502 apte à obtenir des valeurs de prédicteurs liés à la variable par un contexte de fonctionnement commun,
- un module M503 apte à estimer une valeur de la variable de fonctionnement, à l'aide d'un premier modèle prédictif et en fonction des valeurs des prédicteurs,
- un module M504 apte à générer un message d'alimentation, comprenant au moins la valeur mesurée et les valeurs des prédicteurs, si l'écart entre la valeur mesurée et la valeur estimée est supérieur ou égale à un seuil déterminé, dit seuil d'alimentation,
- un module M505 apte à émettre le message d'alimentation généré MsgAlim1 ou MsgAlim2, à destination d'un serveur d'actualisation connecté au réseau,
- un module M506 apte à recevoir un message d'actualisation MsgActu1, comprenant un deuxième modèle prédictif actualisé sur la base au moins du message d'alimentation, en provenance du serveur d'actualisation,
- un module M507 apte à remplacer le premier modèle prédictif par le deuxième modèle prédictif,
- et dans un mode de réalisation particulier de l'invention, un module M508 apte à générer localement un deuxième modèle prédictif sur la base du premier modèle prédictif, de la valeur mesurée et des valeurs des prédicteurs, dit modèle prédictif actualisé localement, le message d'alimentation MsgAlim1 ou MsgAlim2 comprenant en outre ce modèle prédictif actualisé localement.

La **figure 4** présente un exemple de structure d'un dispositif de distribution d'un modèle prédictif d'une variable représentative du fonctionnement d'un terminal mobile, selon un aspect de l'invention.

Le dispositif 200 de distribution met en œuvre le procédé de distribution, dont différents modes de réalisation viennent d'être décrits.

Un tel dispositif 200 peut être mis en œuvre dans un serveur apte à se connecter à tout type de réseau de communication par paquets, tel que 4G, WiFi, etc.

Par exemple, le dispositif 200 comprend une unité de traitement 230, équipée par exemple d'un microprocesseur µP, et pilotée par un programme d'ordinateur 210, stocké dans une mémoire 220 et mettant en œuvre le procédé de distribution selon l'invention. A l'initialisation, les instructions de code du programme d'ordinateur 210 sont par exemple chargées dans une mémoire RAM, avant d'être exécutées par le processeur de l'unité de traitement 230.

Une telle mémoire 220 et un tel processeur de l'unité de traitement 230 sont aptes à, et configurés pour contrôler des modules matériels ou logiciels du dispositif 200, parmi lesquels :
- un module M601 apte à recevoir, en provenance d'un terminal mobile connecté au réseau de communication par paquets, un message d'alimentation MsgAlim1 ou MsgAlim2, comprenant au moins une valeur mesurée d'une variable de fonctionnement du terminal et des valeurs de prédicteurs liés par un même contexte de fonctionnement,
- un module M602 apte à générer un deuxième modèle prédictif sur la base au moins d'un premier modèle prédictif et du message d'alimentation MsgAlim1 ou MsgAlim2, le deuxième modèle prédictif, dit modèle prédictif actualisé, étant destiné à remplacer le premier modèle prédictif,
- un module M603 apte à émettre, à destination du terminal mobile, un premier message d'actualisation MsgActu1 comprenant le modèle prédictif actualisé,
- un module M604 apte à émettre, à destination d'un serveur de stockage connecté au réseau de communication par paquets, un deuxième message d'actualisation MsgActu2 comprenant le modèle prédictif actualisé.

Les figures 3 et 4 illustrent seulement une manière particulière, parmi plusieurs possibles, de mettre en œuvre les procédés détaillés ci-dessus, en relation avec les figures 1 et 2. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les exemples de réalisation de l'invention qui viennent d'être présentés ne sont que quelques-uns des modes de réalisation envisageables. Ils montrent que l'invention permet l'utilisation de modèles prédictifs pour une variable de fonctionnement d'un terminal mobile, ces modèles prédictifs étant actualisés à l'aide de données provenant de toute une flotte de terminaux mobiles en temps réel, tout en minimisant la bande passante radioélectrique utilisée par les messages alimentant et actualisant les modèles prédictif.

## Revendications

1. **Procédé** d'actualisation d'un modèle prédictif d'une variable représentative du fonctionnement d'un terminal mobile (T1) connecté à un réseau de communication par paquets, **caractérisé par** un premier modèle prédictif (Model1) étant apte à estimer une valeur de la variable, dite valeur estimée, en fonction de la valeur de paramètres, dits prédicteurs, liés à la variable par un contexte de fonctionnement commun, le procédé étant mis en **oeuvre par le terminal mobile** et comprenant l'étape suivante :
• génération (E07; F09) d'un message d'alimentation, comprenant au moins une valeur mesurée de la variable et des valeurs des prédicteurs, si (E06; F06) l'écart entre la valeur mesurée et une valeur estimée à l'aide du premier modèle prédictif en fonction des valeurs des prédicteurs est supérieur ou égal à un seuil déterminé, dit seuil d'alimentation.

2. **Procédé** d'actualisation selon la revendication 1, comprenant en outre les étapes suivantes :
• émission (E08; F10) du message d'alimentation (MsgAlim1; MsgAlim2) généré, à destination d'un serveur d'actualisation (BE) connecté au réseau,
• réception (E13; F16) d'un message d'actualisation (MsgActu1), comprenant un deuxième modèle prédictif actualisé (Model2; Model2") sur la base au moins du message d'alimentation, en provenance du serveur d'actualisation,
• remplacement (E14; F17) du premier modèle prédictif par le deuxième modèle prédictif.

3. **Procédé** d'actualisation selon la revendication 1, où le seuil d'alimentation utilisé est compris dans un message reçu en provenance du serveur d'actualisation.

4. **Procédé** d'actualisation selon la revendication 2, où le message d'actualisation comprend un seuil d'alimentation actualisé, et où le procédé comprend en outre une étape de remplacement du seuil d'alimentation par le seuil d'alimentation actualisé.

5. **Procédé** d'actualisation selon l'une des revendications précédentes, où le terminal mobile fait partie d'un ensemble de terminaux mobiles (T1, T2, T3) dit ensemble de collecte, et où le deuxième modèle prédictif reçu est actualisé sur la base d'un message d'alimentation émis par le terminal mobile et au moins un autre terminal mobile de l'ensemble de collecte.

6. **Procédé** d'actualisation selon l'une des revendications précédentes, comprenant en outre une étape (F07) de génération d'un deuxième modèle prédictif sur la base du premier modèle prédictif, de la valeur mesurée et des valeurs des prédicteurs, dit modèle prédictif actualisé localement, et où le message d'alimentation comprend en outre le modèle prédictif actualisé localement.

7. **Procédé** d'actualisation selon l'une des revendications précédentes, comprenant une étape (E01, E02; F01, F02) préalable d'obtention du premier modèle prédictif depuis un serveur de stockage connecté au réseau de communication par paquets.

8. **Procédé** de distribution d'un modèle prédictif d'une variable représentative du fonctionnement d'un terminal mobile (T1) connecté à un réseau de communication par paquets, dit modèle prédictif, **caractérisé par** un premier modèle prédictif (Model1) étant apte à estimer une valeur de la variable, dite valeur estimée, en fonction de la valeur de paramètres, dits prédicteurs, liés à la variable par un contexte de fonctionnement commun, le procédé étant mis en œuvre par un serveur d'actualisation (BE) connecté au réseau de communication par paquets et comprenant les étapes suivantes :
• réception (E09; F11), en provenance du terminal mobile, d'un message d'alimentation (MsgAlim1; MsgAlim2), comprenant au moins une valeur mesurée de la variable et des valeurs des prédicteurs,
• génération (E10; F13) d'un deuxième modèle prédictif (Model2; Model2") sur la base au moins du premier modèle prédictif et du message d'alimentation, le deuxième modèle prédictif, dit modèle prédictif actualisé, étant destiné à remplacer le premier modèle prédictif,
• émission (E12; F15), à destination du terminal mobile, d'un premier message d'actualisation (MsgActu1) comprenant le modèle prédictif actualisé,
• émission (E15; F18), à destination d'un serveur de stockage connecté au réseau de communication par paquets, d'un deuxième message d'actualisation (MsgActu2) comprenant le modèle prédictif actualisé.

9. **Procédé** de distribution selon la revendication 8, où le premier message d'actualisation comprend en outre un seuil relatif à un écart maximal autorisé entre la valeur estimée et la valeur mesurée, dit seuil d'alimentation actualisé.

10. **Procédé** de distribution selon l'une des revendications 8 ou 9, où le message d'alimentation comprend en outre le premier modèle prédictif, le premier modèle prédictif ayant été actualisé localement par le terminal, et où l'étape de génération comprend une étape d'agrégation (F13) du premier modèle prédictif avec d'autres modèles prédictifs actualisés localement par d'autres terminaux.

11. **Terminal mobile** connecté à un réseau de communication par paquets, apte à actualiser un modèle prédictif d'une variable représentative du fonctionnement du terminal mobile, **caractérisé par** un premier modèle prédictif étant apte à estimer une valeur de la variable, dite valeur estimée, en fonction de la valeur de paramètres, dits prédicteurs, liés à la variable par un contexte de fonctionnement commun, comprenant au moins un processeur configuré pour effectuer les actions suivantes :
• génération d'un message d'alimentation, comprenant au moins une valeur mesurée de la variable et des valeurs des prédicteurs, si l'écart entre la valeur mesurée et une valeur estimée à l'aide du premier modèle prédictif en fonction des valeurs des prédicteurs est supérieur ou égal à un seuil déterminé, dit seuil d'alimentation,
• émission du message d'alimentation généré, à destination d'un serveur d'actualisation connecté au réseau,
• réception d'un message d'actualisation, comprenant un deuxième modèle prédictif actualisé sur la base au moins du message d'alimentation, en provenance du serveur d'actualisation,
• remplacement du premier modèle prédictif par le deuxième modèle prédictif.

12. **Serveur d'actualisation** connecté à un réseau de communication par paquets, apte à distribuer un modèle prédictif d'une variable représentative du fonctionnement d'un terminal mobile connecté au réseau de communication par paquets, dit modèle prédictif, **caractérisé par** un premier modèle prédictif étant apte à estimer une valeur de la variable, dite valeur estimée, en fonction de la valeur de paramètres, dits prédicteurs, liés à la variable par un contexte de fonctionnement commun, comprenant au moins un processeur configuré pour effectuer les actions suivantes :
• réception, en provenance du terminal mobile, d'un message d'alimentation, comprenant au moins une valeur mesurée de la variable et des valeurs des prédicteurs,
• génération d'un deuxième modèle prédictif sur la base au moins du premier modèle prédictif et du message d'alimentation, le deuxième modèle prédictif, dit modèle prédictif actualisé, étant destiné à remplacer le premier modèle prédictif,
• émission, à destination du terminal mobile, d'un premier message d'actualisation comprenant le modèle prédictif actualisé,
• émission, à destination d'un serveur de stockage connecté au réseau de communication par paquets, d'un deuxième message d'actualisation comprenant le modèle prédictif actualisé.

13. **Système** d'actualisation et de distribution d'un modèle prédictif comprenant au moins un terminal mobile conforme à la revendication 11, un serveur d'actualisation conforme à la revendication 12, et un serveur de stockage de modèles prédictifs.

14. **Programme** d'ordinateur comprenant des instructions pour la mise en œuvre des étapes du procédé d'actualisation selon la revendication 1, lorsque ce programme est exécuté par un processeur.

15. **Support d'informations** lisible par un terminal mobile, sur lequel est enregistré le programme selon la revendication 14.

## Patentansprüche

1. Verfahren zur Aktualisierung eines Vorhersagemodells einer Variablen, die für den Betrieb eines mobilen Endgeräts (T1) repräsentativ ist, das mit einem Paketkommunikationsnetzwerk verbunden ist, **gekennzeichnet durch** ein erstes Vorhersagemodell (Modell), das geeignet ist, einen Wert der Variablen, Schätzwert genannt, in Abhängigkeit von dem Wert von Parametern, Prädiktoren genannt, zu schätzen, die durch einen gemeinsamen Betriebskontext mit der Variablen verbunden sind, wobei das Verfahren von dem mobilen Endgerät durchgeführt wird und den folgenden Schritt umfasst:
• Erzeugen (E07; F09) einer Versorgungsnachricht, umfassend mindestens einen Messwert der Variablen und Werte der Prädiktoren, wenn (E06; F06) die Abweichung zwischen dem Messwert und einem Wert, der mithilfe des ersten Vorhersagemodells in Abhängigkeit von den Werten der Prädiktoren geschätzt wird, größer als oder gleich einer bestimmten Schwelle, Versorgungsschwelle genannt, ist.

2. Aktualisierungsverfahren nach Anspruch 1, ferner umfassend die folgenden Schritte:
• Senden (E08; F10) der erzeugten Versorgungsnachricht (MsgAlim1; MsgAlim2) an einen Aktualisierungsserver (BE), der mit dem Netzwerk verbunden ist,
• Empfangen (E13; F16) einer Aktualisierungsnachricht (MsgActu1), die ein zweites Vorhersagemodell (Model2; Model2") umfasst, das auf der Grundlage zumindest der Versorgungsnachricht aktualisiert wird, vom Aktualisierungsserver,
• Ersetzen (E14; F17) des ersten Vorhersagemodells durch das zweite Vorhersagemodell.

3. Aktualisierungsverfahren nach Anspruch 1, wobei die verwendete Versorgungsschwelle in einer Nachricht enthalten ist, die vom Aktualisierungsserver erhalten wird.

4. Aktualisierungsverfahren nach Anspruch 2, wobei die Aktualisierungsnachricht eine aktualisierte Versorgungsschwelle umfasst, und wobei das Verfahren ferner einen Schritt des Ersetzens der Versorgungsschwelle durch die aktualisierte Versorgungsschwelle umfasst.

5. Aktualisierungsverfahren nach einem der vorhergehenden Ansprüche, wobei das mobile Endgerät zu einer Menge von mobilen Endgeräten (T1, T2, T3), Erfassungsmenge genannt, gehört, und wobei das empfangene zweite Vorhersagemodell auf der Grundlage einer Versorgungsnachricht aktualisiert wird, die vom mobilen Endgerät und mindestens einem anderen mobilen Endgerät der Erfassungsmenge gesendet wird.

6. Aktualisierungsverfahren nach einem der vorhergehenden Ansprüche, ferner umfassend einen Schritt (F07) des Erzeugens eines zweiten Vorhersagemodells auf der Grundlage des ersten Vorhersagemodells, des Messwerts und der Werte der Prädiktoren, lokal aktualisiertes Vorhersagemodell genannt, und wobei die Aktualisierungsnachricht ferner das lokal aktualisierte Vorhersagemodell umfasst.

7. Aktualisierungsverfahren nach einem der vorhergehenden Ansprüche, umfassend einen vorhergehenden Schritt (E01, E02; F01, F02) des Beziehens des ersten Vorhersagemodells von einem Speicherserver, der mit dem Paketkommunikationsnetzwerk verbunden ist.

8. Verfahren zur Verteilung eines Vorhersagemodells einer Variablen, die für den Betrieb eines mobilen Endgeräts (T1) repräsentativ ist, das mit einem Paketkommunikationsnetzwerk verbunden ist, Vorhersagemodell genannt, **gekennzeichnet durch** ein erstes Vorhersagemodell (Modell), das geeignet ist, einen Wert der Variablen, Schätzwert genannt, in Abhängigkeit von dem Wert von Parametern, Prädiktoren genannt, zu schätzen, die durch einen gemeinsamen Betriebskontext mit der Variablen verbunden sind, wobei das Verfahren von einem Aktualisierungsserver (BE) durchgeführt wird, der mit dem Paketkommunikationsnetzwerk verbunden ist, und die folgenden Schritte umfasst:
• Empfangen (E09; F11), vom mobilen Endgerät, einer Versorgungsnachricht (MsgAlim1; MsgAlim2) umfassend mindestens einen Messwert der Variablen und Werte der Prädiktoren,
• Erzeugen (E10; F13) eines zweiten Vorhersagemodells (Model2; Model2") auf der Grundlage zumindest des ersten Vorhersagemodells und der Versorgungsnachricht, wobei das zweite Vorhersagemodell, aktualisiertes Vorhersagemodell genannt, dazu bestimmt ist, das erste Vorhersagemodell zu ersetzen,
• Senden (E12; F15) einer ersten Aktualisierungsnachricht (MsgActu1) umfassend das aktualisierte Vorhersagemodell an das mobile Endgerät,
• Senden (E15; F18) einer zweiten Aktualisierungsnachricht (MsgActu2) umfassend das aktualisierte Vorhersagemodell an einen Speicherserver, der mit dem Paketkommunikationsnetzwerk verbunden ist.

9. Verteilungsverfahren nach Anspruch 8, wobei die erste Aktualisierungsnachricht ferner eine Schwelle bezogen auf eine maximale zulässige Abweichung zwischen dem Schätzwert und dem Messwert, aktualisierte Versorgungsschwelle genannt, umfasst.

10. Verteilungsverfahren nach einem der Ansprüche 8 oder 9, wobei die Versorgungsnachricht ferner das erste Vorhersagemodell umfasst, wobei das erste Vorhersagemodell lokal vom Endgerät aktualisiert wurde, und wobei der Schritt des Erzeugens einen Schritt des Aggregierens (F13) des ersten Vorhersagemodells mit anderen Vorhersagemodellen, die von anderen Endgeräten lokal aktualisiert werden, umfasst.

11. Mobiles Endgerät, das mit einem Paketkommunikationsnetzwerk verbunden ist, das geeignet ist, ein Vorhersagemodell einer Variablen zu aktualisieren, die für den Betrieb des mobilen Endgeräts repräsentativ ist, **gekennzeichnet durch** ein erstes Vorhersagemodell, das geeignet ist, einen Wert der Variablen, Schätzwert genannt, in Abhängigkeit von dem Wert von Parametern, Prädiktoren genannt, zu schätzen, die durch einen gemeinsamen Betriebskontext mit der Variablen verbunden sind, umfassend mindestens einen Prozessor, der dazu ausgebildet ist, die folgenden Aktionen durchzuführen:
• Erzeugen einer Versorgungsnachricht, umfassend mindestens einen Messwert der Variablen und der Werte der Prädiktoren, wenn die Abweichung zwischen dem Messwert und dem Wert, der mithilfe des ersten Vorhersagemodells in Abhängigkeit von den Werten der Prädiktoren geschätzt wird, größer als oder gleich einer bestimmten Schwelle, Versorgungsschwelle genannt, ist,
• Senden der erzeugten Versorgungsnachricht an einen Aktualisierungsserver, der mit dem Netzwerk verbunden ist,
• Empfangen einer Aktualisierungsnachricht, die ein zweites Vorhersagemodell umfasst, das auf der Grundlage zumindest der Versorgungsnachricht aktualisiert wird, vom Aktualisierungsserver,
• Ersetzen des ersten Vorhersagemodells durch das zweite Vorhersagemodell.

12. Aktualisierungsserver, der mit einem Paketkommunikationsnetzwerk verbunden ist, der geeignet ist, ein Vorhersagemodell einer Variablen zu verteilen, die für den Betrieb eines mobilen Endgeräts repräsentativ ist, das mit dem Paketkommunikationsnetzwerk verbunden ist, Vorhersagemodell genannt, **gekennzeichnet durch** ein erstes Vorhersagemodell, das geeignet ist, einen Wert der Variablen, Schätzwert genannt, in Abhängigkeit von dem Wert von Parametern, Prädiktoren genannt, zu schätzen, die durch einen gemeinsamen Betriebskontext mit der Variablen verbunden sind, umfassend mindestens einen Prozessor, der dazu ausgebildet ist, die folgenden Aktionen durchzuführen:
• Empfangen, vom mobilen Endgerät, einer Versorgungsnachricht umfassend mindestens einen Messwert der Variablen und Werte der Prädiktoren,
• Erzeugen eines zweiten Vorhersagemodells auf der Grundlage zumindest des ersten Vorhersagemodells und der Versorgungsnachricht, wobei das zweite Vorhersagemodell, aktualisiertes Vorhersagemodell genannt, dazu bestimmt ist, das erste Vorhersagemodell zu ersetzen,
• Senden einer ersten Aktualisierungsnachricht umfassend das aktualisierte Vorhersagemodell an das mobile Endgerät,
• Senden einer zweiten Aktualisierungsnachricht umfassend das aktualisierte Vorhersagemodell an einen Speicherserver, der mit dem Paketkommunikationsnetzwerk verbunden ist.

13. System zur Aktualisierung und Verteilung eines Vorhersagemodells umfassend mindestens ein mobiles Endgerät nach Anspruch 11, einen Aktualisierungsserver nach Anspruch 12 und einen Server zur Speicherung von Vorhersagemodellen.

14. Computerprogramm umfassend Anweisungen für die Durchführung der Schritte des Verfahrens nach Anspruch 1, wenn dieses Programm von einem Prozessor ausgeführt wird.

15. Von einem mobilen Endgerät lesbarer Informationsträger, auf dem das Programm nach Anspruch 14 gespeichert ist.

## Claims

1. **Method** of updating a predictive model of a variable representative of the operation of a mobile terminal (T1) connected to a packet-switched communication network, **characterized by** a first predictive model (Model1) being able to estimate a value of the variable, called estimated value, as a function of the value of parameters, called predictors, linked to the variable by a common operating context, the method being **implemented by the mobile terminal** and comprising the following step:
• generating (E07; F09) a feed message, comprising at least one measured value of the variable and values of the predictors, if (E06; F06) the difference between the measured value and a value estimated using the first predictive model as a function of the values of the predictors is greater than or equal to a determined threshold, called feed threshold.

2. Update **method** according to Claim 1, further comprising the following steps:
• transmitting (E08; F10) the generated feed message (MsgAlim1; MsgAlim2) to an update server (BE) connected to the network,
• receiving (E13; F16) an update message (MsgActu1), comprising a second predictive model (Model2; Model 2'') updated on the basis at least of the feed message, from the update server,
• replacing (E14; F17) the first predictive model with the second predictive model.

3. Update **method** according to Claim 1, wherein the feed threshold used is contained in a message received from the update server.

4. Update **method** according to Claim 2, wherein the update message comprises an updated feed threshold, and wherein the method further comprises a step of replacing the feed threshold with the updated feed threshold.

5. Update **method** according to one of the preceding claims, wherein the mobile terminal is part of a set of mobile terminals (T1, T2, T3) called collection set, and wherein the second received predictive model is updated on the basis of a feed message transmitted by the mobile terminal and at least one other mobile terminal from the collection set.

6. Update **method** according to one of the preceding claims, further comprising a step (F07) of generating a second predictive model on the basis of the first predictive model, of the measured value and of the values of the predictors, called locally updated predictive model, and wherein the feed message further comprises the locally updated predictive model.

7. Update **method** according to one of the preceding claims, comprising a preliminary step (E01, E02; F01, F02) of obtaining the first predictive model from a storage server connected to the packet-switched communication network.

8. **Method** of distributing a predictive model of a variable representative of the operation of a mobile terminal (T1) connected to a packet-switched communication network, called predictive model, **characterized by** a first predictive model (Model1) being able to estimate a value of the variable, called estimated value, as a function of the value of parameters, called predictors, linked to the variable by a common operating context, the method being implemented by an update server (BE) connected to the packet-switched communication network and comprising the following steps:
• receiving (E09; F11), from the mobile terminal, a feed message (MsgAlim1; MsgAlim2), comprising at least one measured value of the variable and values of the predictors,
• generating (E10; F13) a second predictive model (Model 2; Model2'') on the basis at least of the first predictive model and of the feed message, the second predictive model, called updated predictive model, being intended to replace the first predictive model,
• transmitting (E12; F15), to the mobile terminal, a first update message (MsgActu1) comprising the updated predictive model,
• transmitting (E15; F18), to a storage server connected to the packet-switched communication network, a second update message (MsgActu2) comprising the updated predictive model.

9. Distribution **method** according to Claim 8, wherein the first update message further comprises a threshold relating to a maximum authorized difference between the estimated value and the measured value, called updated feed threshold.

10. Distribution **method** according to either of Claims 8 or 9, wherein the feed message further comprises the first predictive model, the first predictive model having been updated locally by the terminal, and wherein the generation step comprises a step (F13) of aggregating the first predictive model with other predictive models updated locally by other terminals.

11. **Mobile terminal** connected to a packet-switched communication network, able to update a predictive model of a variable representative of the operation of the mobile terminal, **characterized by** a first predictive model being able to estimate a value of the variable, called estimated value, as a function of the value of parameters, called predictors, linked to the variable by a common operating context, comprising at least one processor configured to perform the following actions:
• generating a feed message, comprising at least one measured value of the variable and values of the predictors, if the difference between the measured value and a value estimated using the first predictive model as a function of the values of the predictors is greater than or equal to a determined threshold, called feed threshold,
• transmitting the generated feed message to an update server connected to the network,
• receiving an update message, comprising a second predictive model updated on the basis at least of the feed message, from the update server,
• replacing the first predictive model with the second predictive model.

12. **Update server** connected to a packet-switched communication network, able to distribute a predictive model of a variable representative of the operation of a mobile terminal connected to the packet-switched communication network, called predictive model, **characterized by** a first predictive model being able to estimate a value of the variable, called estimated value, as a function of the value of parameters, called predictors, linked to the variable by a common operating context, comprising at least one processor configured to perform the following actions:
• receiving, from the mobile terminal, a feed message, comprising at least one measured value of the variable and values of the predictors,
• generating a second predictive model on the basis at least of the first predictive model and of the feed message, the second predictive model, called updated predictive model, being intended to replace the first predictive model,
• transmitting, to the mobile terminal, a first update message comprising the updated predictive model,
• transmitting, to a storage server connected to the packet-switched communication network, a second update message comprising the updated predictive model.

13. **System** for updating and distributing a predictive model comprising at least a mobile terminal according to Claim 11, an update server according to Claim 12, and a server for storing predictive models.

14. Computer **program** comprising instructions for implementing the steps of the update method according to Claim 1, when this program is executed by a processor.

15. **Information medium** able to be read by a mobile terminal, on which the program according to Claim 14 is recorded.
